# FASCICULE DE BREVET EUROPEEN

(11) **EP 2 629 879 B1**
(45) Date de publication et mention de la délivrance du brevet: **12.04.2017**
(21) Numéro de dépôt: 11787918.9
(22) Date de dépôt: 18.10.2011
(51) Int. Cl.: B01D 53/14, C01B 3/52, C10K 1/00

(54) **CAPTURE D'OXYDES DE CARBONE**
ABTRENNUNG VON KOHLENDIOXID
CARBON DIOXIDE CAPTURE

(30) Priorité: 18.10.2010 FR 1058454
(43) Date de publication de la demande: 28.08.2013
(73) Titulaire: Arkema France, 92700 Colombes (FR)
(72) Inventeur: PLEE, Dominique, 33 Lima (PE); FREMY, Georges, F-64390 Sauveterre de Béarn (FR)
(74) Mandataire: Killis, Andréas
(86) Numéro de dépôt international: PCT/FR2011/052424
(87) Numéro de publication internationale: WO 2012/052671

(56) Documents cités:
- EP-A1- 0 362 023
- US-A- 2 649 166
- US-A- 4 561 869

## Description

L'invention concerne le domaine du captage d'oxydes de carbone, et en particulier le domaine du captage du dioxyde de carbone ou CO₂. Plus particulièrement, l'invention concerne le domaine de la capture de molécules d'oxyde de carbone, particulièrement le CO₂, contenues dans un flux gazeux, afin, entre autres, de stocker ce CO₂ dans des réservoirs souterrains, dans l'optique de lutter contre les effets du réchauffement climatique.

L'invention est particulièrement adaptée à la récupération des oxydes de carbone, préférentiellement le dioxyde de carbone, lorsqu'ils sont récupérés d'un gaz à pression supérieure à la pression atmosphérique. Un tel gaz est typiquement un gaz de synthèse produit par gazéification de charbon ou par réformage de gaz naturel, suivi ou non d'une réaction dite de « gaz à l'eau ».

On élimine les oxydes de carbone, et en particulier le dioxyde de carbone, des gaz en question en vue soit d'utiliser l'hydrogène comme combustible ou en vue d'utiliser un mélange de monoxyde de carbone et d'hydrogène, soit pour synthétiser du méthanol, soit fabriquer des combustibles, soit pour tout autre usage où le gaz de synthèse est utilisé.

Le CO₂ entre dans la composition des gaz à effet de serre (GES) dont il semble maintenant très probable qu'ils sont impliqués dans le réchauffement climatique. Le protocole de Kyoto oblige les pays développés signataires à réduire de 5,2 % en moyenne leurs émissions de GES sur la période 2008-2012. Selon le Groupe intergouvernemental d'experts sur l'évolution du climat (GIEC), il faudrait réduire de plus de moitié les émissions mondiales à l'horizon 2050.

La teneur en CO₂ dans l'atmosphère, qui était de 280 ppm au début du XIX^{e} siècle, est de 370 ppm aujourd'hui avec une augmentation de 60 ppm pendant ces 50 dernières années. L'atmosphère contient aujourd'hui environ 700 Gt de CO₂.

Le CO₂ réside dans l'atmosphère sur une grande période de temps. Il se solubilise lentement dans les océans et contribue à leur acidification. On estime qu'entre 30% et 50% de tout le CO₂ émis par les émissions anthropogéniques ont été piégés par les océans.

La combustion des énergies fossiles (charbon, pétrole et gaz) dans les transports, la production d'électricité et l'industrie ainsi que l'habitat, sont les principales sources de rejets de CO₂ dans l'atmosphère avec 25 milliards de tonnes par an à l'échelle mondiale. A titre d'exemple, une centrale thermique peut rejeter jusqu'à 6 millions de tonnes de CO₂/an.

La capture à la source du CO₂ des grands sites de production d'électricité et les sites d'industrie lourde pour le stocker constitue, au niveau mondial, une des voies de recherche les plus prometteuses pour satisfaire aux critères de Kyoto. Un rapport du GIEC reconnaît également que ces technologies sont un moyen de solutionner en partie la problématique du changement climatique.

Ceci est d'autant plus vrai qu'on estime les réserves de charbon à plusieurs centaines d'années, tandis que les réserves de pétrole se chiffrent plutôt en dizaines d'années. Or le charbon, employé par exemple dans les centrales thermiques, présente l'inconvénient de rejeter plus de CO₂ par kWh que le méthane, soit environ 750 g de CO₂ par kWh. Enfin on estime à une centaine le nombre de projets qui pourraient voir le jour en 2020.

Concernant les technologies de capture de CO₂ existantes, trois voies technologiques sont en compétition mais correspondent à différentes conditions de température et pression des procédés :

La première voie est la postcombustion, qui consiste à prélever le CO₂ au niveau des gaz de combustion rejetés en cheminée. Les gaz qui s'échappent d'une centrale thermique sont constitués d'azote, de CO₂ et d'impuretés de type NOx ou de SO₂. La teneur en CO₂ est de 12% à 15% pour une centrale à charbon et de 6 à 8% pour une centrale au gaz. Dans certains procédés chimiques, tels que la fabrication de ciment, la teneur en CO₂ peut monter jusqu'à 30%. La pression de ces effluents gazeux est proche de la pression atmosphérique.

La capture postcombustion a pour objectif d'extraire le CO₂ dilué et peut s'intégrer aux installations existantes, moyennant une re-conception de l'ensemble de l'unité. Toutefois, le fait d'intégrer une section de récupération de CO₂ sur une unité existante ne constitue pas un optimum technologique et la meilleure manière de diminuer les coûts énergétiques de récupération passe par une intégration globale pensée dès le début du projet de l'installation. La postcombustion est actuellement la méthode la mieux maîtrisée.

La deuxième voie possible est la précombustion, dont l'objectif est de capturer le CO₂ lors du processus de fabrication du combustible. Le combustible (charbon, gaz, biomasse) est converti en un mélange de monoxyde de carbone et d'hydrogène. La technique utilisée est soit le vaporéformage en présence d'eau, soit l'oxydation partielle en présence d'oxygène. Le CO, présent dans le mélange, réagit avec l'eau pour former du CO₂ et de l'hydrogène (réaction dite de « gaz à l'eau »). Le CO₂, présent à des teneurs de 25% à 40%, est alors séparé de l'hydrogène qui peut être utilisé pour produire de l'énergie sans émission de CO₂.

La troisième voie, l'oxycombustion, utilise l'oxygène pur comme comburant. Cette technologie n'est pas à proprement parler une capture du CO₂. Il s'agit de produire une fumée concentrée à 90% en CO₂ en réalisant une combustion à l'oxygène pratiquement pur. Avec un recyclage d'une partie du CO₂ en substitution de l'azote de l'air, l'oxycombustion nécessite une redéfinition des chaudières et des brûleurs. Un autre écueil de taille reste le prix de l'oxygène. L'oxycombustion est une technique encore au stade de la démonstration.

L'absorption chimique est le procédé le plus couramment utilisé en postcombustion. L'absorption chimique consiste en la capture du CO₂ par un solvant chimique, qui comporte en général des amines. L'utilisation d'amines est en effet connue depuis longtemps en désacidification des gaz. On traite ainsi des gaz naturels riches en H₂S et/ou en CO₂.

Par solvant chimique, on entend un solvant présentant une interaction chimique (réactivité) et une affinité fortes avec le CO₂. Un des inconvénients de ces solvants est que leur chaleur de réaction est élevée et que leur régénération nécessite par conséquent beaucoup d'énergie (chauffage typiquement à 120°C). En contrepartie, l'affinité est grande.

Dans un procédé classique de récupération de CO₂ utilisant l'absorption chimique en postcombustion, les fumées à traiter sont dirigées vers un absorbeur, dans lequel elles sont mélangées à un solvant chimique. Ayant plus d'affinité avec les molécules de CO₂ qu'avec les autres composants des fumées (azote notamment), le solvant capte le CO₂ (on parle de solvant "enrichi") et les autres molécules sont rejetées de l'absorbeur (fumées traitées).

Près de 90% du CO₂ des fumées est ainsi capté par le solvant. Le solvant enrichi est ensuite dirigé vers un régénérateur. L'appareil est chauffé à 120°C, afin de casser les liaisons entre le CO₂ et le solvant. Le CO₂ est alors isolé, puis transporté vers son lieu de stockage. Le solvant, revenu à sa forme initiale (solvant dit "appauvri"), est réinjecté dans l'absorbeur avec les fumées à traiter.

Il existe trois classes d'amines susceptibles de constituer un solvant chimique : amine primaire, secondaire et tertiaire. La mono-éthanolamine (MEA) est plus réactive que les amines plus stériquement encombrées (les amines secondaires ou tertiaires) et domine pour cette raison le marché. Les amines encombrées utilisées sont la 2-amino-2-méthyl-1-propanol (AMP) ou la 2-pipéridine-éthanol (PE) qui présentent une plus faible interaction avec le CO₂ et peuvent être plus faciles à régénérer (« Performance and cost analysis for CO2 capture from flue gas streams : absorption and regeneration aspects », Veawab A. et coll., (2002), Sixth International Conférence on Greenhouse Gas Control Technologies, Kyoto, C4-5).

EP 0362023 A décrit un procédé de traitement d'un gaz avec un solvant qui peut être du diméthoxyméthane. Un autre type d'amines encombrées, les KS1, développées par EXXON sont utilisées dans une unité d'urée en Malaisie (« Development and Applications of flue gas carbon dioxide recovery », Mimura T. et coll., (2000), 5th International Conference on Greenhouse Gas Control Technologies, CAIRNS CSIRO, Pub. ISBN 0 643 06672 1).

Les principales préoccupations avec les amines résident dans leur point d'ébullition qui, s'il est trop bas, fait perdre beaucoup de solvant qu'il faut ensuite récupérer. Les problèmes de corrosion, de dégradation et l'oxydation en présence d'oxygène, de SO₂ ou de NO₂ sont également des inconvénients du procédé d'absorption chimique utilisant des amines.

Enfin, l'énergie de régénération des solvants chimiques est élevée et peut représenter jusqu'à 80% de l'énergie du procédé de capture de CO₂ (« Séparation and Capture of CO2 from large stationary sources and séquestration in geological formations », White C.M. et coll., (2003), J. of the Air and Waste Management Association, 53, p. 645-715).

Mis à part les amines, certains composés inorganiques peuvent être employés comme solvants chimiques. Ainsi, par exemple, le procédé Banfield consiste à piéger le CO₂ avec des sels de potassium ou de sodium. On utilise classiquement du carbonate de potassium en solution à 20-40% et des pressions de 2 MPa à 3 Mpa. Le principal inconvénient de ces composés inorganiques est qu'ils peuvent relarguer du sodium et/ou du potassium dans le gaz produit.

L'ammoniac permet également de piéger le CO₂. En particulier, il est susceptible de capter plus de CO₂ par kg de matière active et de présenter une régénération plus aisée que la MEA (« Ammonia process for Simultaneous reduction of CO2, SO2 and NOx", Yeh J.T. et coll., 19th Annual International Pittsburgh Coal Conférence, Pittsburgh, (2002), Paper 45-1). L'ammoniac pose néanmoins des problèmes en raison de sa volatilité.

En précombustion, l'absorption physique est la meilleure manière de récupérer le CO₂, compte tenu des pressions très différentes (pouvant aller de 2,5 MPa à 50 MPa) par rapport à celles observées en post-combustion.

L'absorption physique utilise des solvants physiques. Par solvant physique, on entend un solvant présentant une interaction chimique modérée avec le CO₂. Les inconvénients et avantages sont à l'opposé de ceux des solvants chimiques. En absorption physique, la capacité du solvant suit une loi de Henry pour des mélanges de gaz idéaux alors qu'en absorption chimique, la capacité du solvant n'est pas linéaire avec la pression (« Gas cleaning for Advanced coal based power génération », Thambimuthu, K., (1993), IEA Coal Research, London Report n° IEACR/53). On conçoit ainsi que l'absorption physique est plus adaptée pour les procédés à « haute pression ».

Le choix d'une technologie dépend donc de nombreux facteurs : pression partielle de CO₂, pourcentage de CO₂ à récupérer, température, sensibilité aux impuretés, présence de particules, coût des additifs pour minimiser la corrosion et l'encrassement, et autres.

À titre d'exemples de solvants physiques, on peut citer le méthanol (Rectisol^{®}), la N-méthylpyrolidone (Purisol^{®}), et le diméthyléther de polyéthylène glycol (Selexol^{®}). Le procédé Rectisol^{®} de Lurgi emploie du méthanol à -40°C et le nombre d'étages de re-compression pour la régénération est élevé ; ceci rend ce procédé très consommateur sur le plan énergétique.

On parle d'absorption hybride pour les procédés combinant des solvants chimiques et physiques. On connaît les procédés Sulfinol^{®} de Shell et Amisol^{®} de Lurgi qui emploient respectivement un mélange de sulfolane, de DIPA et d'eau (une variante remplace la DIPA par la MDEA) et un mélange de méthanol et de MEA ou DEA. L'avantage des procédés hybrides se révèle quand le gaz à traiter est à pression élevée.

En effet, la substitution dans ces conditions d'une partie du solvant chimique par un solvant physique permet de diminuer globalement les coûts énergétiques de la régénération sans diminuer drastiquement la capacité d'absorption. Néanmoins, même diminués, les coûts énergétiques de régénération d'un solvant hybride sont nettement plus élevés (en fonction du taux de solvant chimique dans le mélange) que pour un solvant physique pur.

L'enjeu principal pour que le stockage soit déployé à grande échelle consiste à diminuer la consommation énergétique des procédés. Ainsi, dans le cadre du projet européen Castor, une expérimentation est menée au Danemark pour tenter de ramener le coût de capture en dessous de 30 euros/tonne.

Au delà de la dépense énergétique, d'autres difficultés techniques peuvent se manifester, telles que l'oxydation du solvant, la corrosion des installations, des pertes en phase vapeur, sont les principaux points expliquant le coût de récupération du CO₂ aujourd'hui. Tous ces problèmes nécessitent l'emploi de nombreux additifs.

Il est donc clair que le déploiement à grande échelle des procédés de capture dépend fortement de toutes ces considérations. En effet, dans le meilleur des cas, la capture, le transport et le stockage d'une tonne de CO₂ coûtent entre 60 et 70 euros dont 70 à 80% sont consacrés à la phase de capture. En raison de leur coût d'investissement élevé, les techniques de capture du CO₂ sont plus adaptées aux sources d'émissions importantes et concentrées qu'aux sources de faible flux (centrales électriques thermiques, cimenteries, raffineries, installations de production d'engrais, unités sidérurgiques, pétrochimiques, où la production de CO₂ est concentrée).

Dans le cas de l'absorption chimique par des amines ou des mélanges d'amines, une unité efficace équipée d'une capture de CO₂ doit respecter certaines limites énergétiques. La réglementation européenne impose que la quantité d'énergie dégagée ne doit pas dépasser 2 millions de kilojoules (chauffage à 120°C) par tonne de CO₂ capté.

La technique utilisant de l'ammoniac réfrigéré permettrait de récupérer 90% du CO₂ des fumées, mais elle consomme 10% environ de l'énergie produite pour réfrigérer l'ammoniac et le séparer du CO₂ par la suite.

Le cas de l'absorption par les solvants physiques utilisés actuellement comporte aussi des inconvénients. À titre d'exemple, le procédé Rectisol met en oeuvre du méthanol à des températures nettement négatives sous des fortes pressions : l'énergie mise en jeu provient des variations thermiques et de pression entre régénération et absorption.

Certains solvants de l'art antérieur ont une viscosité élevée qui conduit à des coûts énergétiques plus élevés pour la circulation du solvant et rend plus difficile l'étape de régénération en ralentissant la vitesse du gaz à la désorption.

Toutes ces considérations montrent que le domaine de la capture des oxydes de carbone, et en particulier du CO₂, reste un domaine où des progrès techniques sont indispensables.

La présente invention a donc pour but de fournir un procédé de capture d'oxydes de carbone, monoxyde et/ou dioxyde de carbone, en particulier de CO₂, permettant de répondre à bon nombre de ces inconvénients, en utilisant des solvants ayant une plus grande capacité d'absorption desdits oxydes de carbone, une cinétique d'absorption accélérée, une température d'ébullition élevée, une faible tension de vapeur et une viscosité modérée, entre autres.

Selon un aspect préféré, la présente invention a pour objectif un procédé de capture et/ou de récupération de dioxyde de carbone (CO₂) contenu dans un flux gazeux. Plus précisément, un objectif de la présente invention est un procédé de capture de monoxyde et/ou dioxyde de carbone, de préférence CO₂, contenu dans un flux gazeux, dans lequel le flux gazeux est mis en contact avec un solvant.

Par flux gazeux, on entend les fumées de combustion ou toute émission de gaz et/ou de vapeur, généralement produite par une installation industrielle.

Le flux gazeux est typiquement un mélange gazeux contenant du CO et/ou du CO₂, et pouvant contenir également de façon non exhaustive de l'azote, de l'hydrogène, de l'oxygène, du sulfure d'hydrogène, du dioxyde de soufre, de la vapeur d'eau, et autres.

À titre d'exemple, le procédé de l'invention concerne la récupération de CO et/ou CO₂, de préférence de CO₂, contenu dans un gaz de pression supérieure à la pression atmosphérique. Un tel gaz est typiquement un gaz de synthèse produit par gazéification de charbon (C + H₂O ↔ CO + H₂) ou par réformage de gaz naturel (CH₄ + H₂O ↔ CO + 3H₂), suivi d'une « réaction de gaz à l'eau » (CO + H₂ + H₂O ↔ 2H₂ + CO₂). Le dioxyde de carbone doit par exemple être éliminé du gaz obtenu, en vue d'utiliser l'hydrogène comme combustible.

La Demanderesse a maintenant découvert que les objectifs précités sont atteints en totalité, ou au moins en partie, à l'aide de composés organiques de type poly(oxyméthylènedialkyléthers) ou POM, comme agents de piégeage d'oxydes de carbone, en particulier de CO₂.

Les composés POM sont connus mais pour des utilisations différentes. Par exemple, le brevet français FR 2 881 750 décrit une utilisation des POM en tant que carburants pour piles à combustible. Le brevet EP 1 938 684 et la demande internationale WO 2010/001048 décrivent une utilisation des POM dans le domaine de la thanatopraxie.

La capture (ou piégeage) d'oxydes de carbone selon l'invention est avantageusement basé sur le principe d'absorption qui repose sur le transfert des oxydes de carbone dans un solvant comprenant un ou plusieurs composés organiques de type (poly)oxyméthylènedialkyléthers.

Ainsi, et selon un premier aspect, la présente invention concerne l'utilisation comme agent de piégeage d'oxydes de carbone, en particulier de CO₂, d'au moins un composé de formule (1) suivante :

X-(OCR₂)ₙ-OX' (1),

dans laquelle :
- n est un nombre entier compris entre 2 et 20, de préférence entre 2 et 8, bornes incluses,
- X et X', identiques ou différents, représentent indépendamment l'un de l'autre un radical CₘH₂ₘ₊₁ avec m compris entre 1 et 20, de préférence entre 1 et 10, bornes incluses, et
- R représente l'hydrogène ou X.

Dans le contexte de la présente invention, le terme (poly)oxyméthylènedialkyléthers regroupe les composés de formule (1) ci-dessus, et plus précisément les oxyméthylènedialkyléthers lorsque n est égal à 1 et les poly-oxyméthylènedialkyléthers lorsque n est strictement supérieur à 1.

Dans les composés de formule (1) ci-dessus, les radicaux R peuvent être identiques ou différents. Lorsque R représente X, c'est-à-dire représente CₘH₂ₘ₊₁, les valeurs de m tout particulièrement préférées sont celles comprises entre 1 et 10, de préférence encore entre 1 et 6, bornes incluses.

Selon un mode de réalisation préféré de l'invention, les radicaux X et X' sont identiques. Selon un autre mode de réalisation de l'invention R représente H. Selon un mode de réalisation tout particulièrement préféré, l'invention concerne l'utilisation comme agent de piégeage d'oxydes de carbone, d'au moins un composé de formule X-(OCH₂)ₙ-OX, où X et n sont tels que définis précédemment.

Les composés de formule (1) sont connus et peuvent être aisément préparés à partir de méthanol et de formaldéhyde, lui même produit à partir de méthanol, ou du trimère du formaldéhyde, le trioxane.

Plus généralement, l'ouvrage de J. F. Walker, "Formaldehyde", Robert E. Krieger Publishing Company, Huntington, New York, 3e Edition de 1975 est un ouvrage de référence en la matière. On peut en effet y trouver la description des modes de synthèse aux pages 167 et suivantes, d'une part, et 264 et suivantes, d'autre part. Ces procédés de synthèse sont fondés sur une catalyse acide de la réaction d'un alcool (méthanol ou éthanol) ou d'un acétal (méthylal ou éthylal), sur du formol ou un composé équivalent. Ce type de synthèse est également illustré dans de nombreux brevets tels que US 2 449 469 ou JP 47-40772.

Le brevet US 6 350 919 décrit la synthèse de composés de type polyoxyméthylènedialkyléthers symétriques avec un groupe alkyle, soit méthyle, soit éthyle.

D'autres méthodes de synthèse fondées sur une catalyse de type acides de Lewis ont été également décrites. On peut citer le brevet GB 1 120 524 qui décrit la synthèse de polyoxyméthylènes diéthers stables avec des catalyseurs ioniques de type acides de Lewis.

Selon un mode de réalisation préféré, la synthèse des composés de formule (1) s'effectue sans solvant, par catalyse acide d'un mélange contenant du trioxane et un acétal, au moyen par exemple d'une résine acide ; le grade A15 de Amberlyst^{®} est un des catalyseurs efficaces. Les températures de réaction sont généralement comprises entre 20 et 80°C, de préférence entre 40 et 50°C et la réaction a lieu de préférence à pression atmosphérique.

Le ratio molaire trioxane/acétal est généralement de l'ordre de 0,75. De manière générale, le produit résultant de la synthèse comprend une distribution assez large de l'indice n des groupements méthylène. Une séparation par distillation permet de récupérer une fraction « légère » et une fraction « lourde ».

Lorsqu'on utilise le méthylal, on fabrique le polyoxyméthylène/MM où M représente les groupes méthyle et lorsqu'on utilise l'éthylal, on produit le polyoxyméthylène/EE où E représente les groupes éthyle. Bien entendu, des mélanges d'acétals sont possibles, auquel cas les produits formés contiendront des mélanges qu'il est possible de séparer par distillation.

Les POM dissymétriques, c'est-à-dire ceux répondant à la formule générale (1), où X et X' sont différents, sont obtenus soit par synthèse directe selon les procédés visés ci-dessus, soit par transacétalisation de deux POM symétriques (X et X' identiques) différents.

Le méthylal ou diméthoxyméthane où n est égal à 1, répond à la formule CH₃-O-CH₂-OCH₃. Les poly(oxyméthylènediméthyléthers) répondent à la formule CH₃-(OCH₂)ₙ-OCH₃, où n est tel que défini précédemment, la valeur 1 exceptée.

D'autres exemples non limitatifs de composés de formule (1) sont les (poly)oxyméthylènediéthyléthers, les (poly)oxyméthylènedipropyléthers, les (poly)-oxyméthylènedibutyléthers, pour les composés de formule (1) symétriques (X et X' sont identiques), et les (poly)oxyméthylèneméthyléthyléthers (CH₃-(OCH₂)ₙ-OC₂H₅, par exemple pour les composés de formule (1) dissymétriques (X et X' sont différents).

Selon un mode de réalisation avantageux, l'invention vise l'utilisation d'au moins un composé choisi parmi CH₃-(OCH₂)₂-OCH₃, CH₃-(OCH₂)₃-OCH₃, CH₃-(OCH₂)₄-OCH₃, CH₃-(OCH₂)₅-OCH₃, CH₃-(OCH₂)₆-OCH₃, CH₃-(OCH₂)₇-OCH₃, CH₃-(OCH₂)₈-OCH₃, C₂H₅-(OCH₂)₂-OC₂H₅, C₂H₅-(OCH₂)₃-OC₂H₅, C₂H₅-(OCH₂)₄-OC₂H₅, C₂H₅-(OCH₂)₅-OC₂H₅, C₂H₅-(OCH₂)₆-OC₂H₅, C₂H₅-(OCH₂)₇-OC₂H₅, C₂H₅-(OCH₂)₈-OC₂H₅, et leurs mélanges en toutes proportions, et très préférentiellement choisi parmi CH₃-(OCH₂)₂-OCH₃,

D'après l'invention, on utilise au moins un composé de formule (1) telle que définie précédemment, dans laquelle n est un nombre entier compris entre 2 et 20, de préférence entre 2 et 8, bornes incluses.

Les composés de formule (1) définie ci-dessus pour lesquels n est strictement supérieur à 1 sont des composés tout à fait adaptés en raison de leur point d'ébullition élevé. En effet, comme indiqué précédemment, on préfère pour les besoins de l'invention utiliser un composé présentant une température d'ébullition élevée, plus précisément une température d'ébullition (ou point d'ébullition) supérieur à 50°C et de préférence encore supérieur à 100°C.

Dans encore un autre mode de réalisation préférée, l'invention concerne l'utilisation d'au moins un composé de formule (1) symétrique (c'est-à-dire X et X' sont identiques). Selon encore un mode de réalisation préféré, l'invention vise l'utilisation d'un mélange de composés de formule (1), dans laquelle X représente le radical méthyle ou le radical éthyle et n est compris entre 2 et 8, bornes incluses.

Selon un mode de réalisation encore plus préféré, l'invention vise l'utilisation d'au moins un composé de formule (1) qui est un mélange de composés de formule CH₃-(OCH₂)ₙ-OCH₃ avec n compris entre 2 et 8, bornes incluses, dont la composition est la suivante (les pourcentages sont exprimés en moles) :

| n | 2 | 3 | 4 | 5 | 6 | 7 | 8 |
|---|---|---|---|---|---|---|---|
| % | 25-50 | 20-40 | 10-25 | 5-10 | 2-5 | <2 | <1 |

Plus particulièrement, une composition préférée pour l'utilisation de la présente invention est un mélange de composés de formule CH₃-(OCH₂)ₙ-OCH₃ avec n compris entre 2 et 8, bornes incluses, dont la composition est la suivante (les pourcentages sont exprimés en moles) :

| n | 2 | 3 | 4 | 5 | 6 | 7 | 8 |
|---|---|---|---|---|---|---|---|
| % | 44 | 32 | 14 | 6 | 2,5 | 1 | <1 |

Selon encore un autre de réalisation préféré, l'invention vise l'utilisation d'un mélange de composés de formule C₂H₅-(OCH₂)ₙ-OC₂H₅ avec n compris entre 1 et 8 bornes incluses, dont la composition est la suivante :

| n | 1 | 2 | 3 | 4 | 5 | 6 | 7 | 8 |
|---|---|---|---|---|---|---|---|---|
| % | 58 | 26 | 10 | 4 | 1,5 | <1 | <1 | <1 |

Les composés de formule (1) ou les mélanges de composés de formule (1) tels qu'ils viennent d'être définis peuvent être utilisés seuls ou mélanges avec un ou plusieurs solvants.

En règle générale, le ou les composés de formule (1) sont présents en une quantité variant de 0,1% en poids à 99% en poids, par rapport au poids total du mélange du ou des composés de formula (1) avec au moins un solvant.

Comme exemples non limitatifs de solvants qui peuvent être utilisés dans le cadre de la présente invention, on peut citer les alcools linéaires, de préférence les alcools linéaires, les cétones, les polyéthylèneglycols, les solvants soufrés, comme par exemple le sulfolane, les solvants azotés, comme par exemple la N-méthylpyrrolidone, et autres.

Selon un autre aspect, la présente invention concerne un procédé de capture d'oxydes de carbone, par exemple CO et/ou CO₂, de préférence de CO₂, comprenant au moins une étape de mise en contact d'un flux gazeux comprenant au moins un oxyde de carbone, avec au moins un composé de formule (1) tel que défini précédemment.

Avant cette étape de mise en contact, le flux gazeux est éventuellement soumis à un pré-traitement, par exemple pour éliminer un ou plusieurs des composés, autres que les oxydes de carbone, et présents dans le flux gazeux.

Avantageusement, et avant d'être soumis à une capture de CO et/ou CO₂ selon le procédé de l'invention, ledit flux gazeux a une teneur en oxydes de carbone, tels que CO et/ou CO₂, comprise dans la gamme allant de 1 % à 100% en volume, de préférence de 1% à 90% en volume, de préférence encore de 1% à 50% en volume, à une température comprise dans la gamme allant de -40°C à 100°C, de préférence de 20 à 80°C, et sous une pression comprise dans la gamme allant de 0,1 MPa à 8 MPa, de préférence de 0,1 MPa à 5 MPa.

Selon un mode de réalisation de l'invention, le procédé de capture d'oxydes de carbone est mis en oeuvre dans une colonne d'absorption à une température comprise dans la gamme allant de -40°C à 100°C, de préférence de 20 à 80°C. La pression dans la colonne est comprise dans la gamme allant de 0,1 MPa à 8 MPa, de préférence de 0,1 MPa à 5 MPa.

À titre d'exemple de colonne, on peut utiliser tout type de colonne, telle qu'une colonne à plateaux perforés, colonne à clapets, colonne à calottes, colonne à garnissage vrac ou colonne à garnissage structuré.

Selon un mode de réalisation préféré du procédé de capture selon l'invention, le ratio, à 0,1 MPa et 25°C, [composé de formule (1)/oxyde de carbone] est avantageusement compris entre 0,1 et 0,33 kg de composé de formule (1) par litre NTP d'oxyde de carbone, par exemple de CO₂. De manière plus préférentielle, ce ratio est compris entre 0,10 et 0,20 kg de composé de formule (1) par litre NTP de CO₂.

Selon le procédé de la présente invention, la capture d'oxydes de carbone procède par absorption physique desdits oxydes de carbone, c'est-à-dire qu'il n'y a pas de réaction chimique entre lesdits oxydes de carbone et le solvant physique d'absorption (les composés de formule (1)). La régénération du solvant selon l'invention est ainsi facilitée.

De façon inattendue, la Demanderesse a constaté que les composés de formule (1) sont susceptibles d'absorber les oxydes de carbone et, en particulier le CO₂, de manière remarquable et selon un mécanisme purement physique. De plus, ces composés possèdent des points d'ébullition suffisamment élevés pour être compatibles avec des procédés de capture d'oxydes de carbone, et notamment de CO₂, sont chimiquement plus stables que les amines et ne conduisent pas, ou peu, à des phénomènes de corrosion.

Le procédé de l'invention met avantageusement en oeuvre au moins un composé de formule (1), de préférence choisi parmi le CH₃-(OCH₂)₂₋₈-OCH₃, le CH₃-(OCH₂)₂₋₄-OCH₃, et le CH₃-(OCH₂)₄₋₈-OCH3.

Le procédé de l'invention permet ainsi de capter les oxydes de carbone compris dans un flux gazeux, et conduit ainsi à un adsorbat (ou « solvant enrichi ») comprenant au moins un composé de formule (1) précédemment défini et au moins un oxyde de carbone, monoxyde et/ou dioxyde de carbone, de préférence dioxyde de carbone.

Selon encore un autre aspect, l'invention concerne également le procédé de régénération du solvant enrichi qui comprend au moins une étape de diminution de la pression du solvant enrichi, de préférence jusqu'à pression atmosphérique, et/ou au moins une étape d'augmentation de la température du solvant enrichi jusqu'à une température inférieure à 100°C, et de façon encore plus préférée inférieure à 50°C.

Selon un mode de réalisation préféré, l'étape de régénération du solvant enrichi est mise en oeuvre par détente de pression du solvant, en particulier si la pression de capture des oxydes de carbone (pression d'absorption) est supérieure à 0,1 MPa. Cette régénération par détente est faite classiquement, par exemple par passage du solvant enrichi dans un ballon de détente.

On obtient ainsi, d'une part un mélange gazeux très riche en oxydes de carbone (dont le taux dépend de la sélectivité du solvant par rapport aux autres composés du flux gazeux à traiter) et d'autre part un solvant appauvri en oxydes de carbone dont le taux résiduel dépend de la pression de détente.

Le cas échéant le mélange gazeux riche en oxydes de carbone et/ou le solvant appauvri en oxydes de carbone peu(ven)t être soumis à une ou plusieurs nouvelles étapes de régénération par détente de pression et/ou augmentation de température.

Selon encore un autre aspect, la présente invention vise un procédé continu de capture d'oxydes de carbone, CO et/ou CO₂ en particulier, comprenant de manière alternée et consécutive :
- au moins une étape de mise en contact d'un flux gazeux comprenant au moins un oxyde de carbone, avec au moins un composé de formule (1) tel que défini précédemment, en tant que solvant d'absorption dudit oxyde de carbone, et
- au moins une étape de régénération du solvant d'absorption, comme précédemment définie, par diminution de la pression du solvant enrichi et/ou augmentation de la température du solvant enrichi.

Dans le procédé ci-dessus, le solvant régénéré est à nouveau engagé dans une étape d'absorption (capture) d'oxyde de carbone, puis régénéré, et ainsi de suite.

Ce procédé continu peut ainsi avantageusement être intégré dans une unité industrielle produisant de grandes quantités d'oxydes de carbone qui peuvent ainsi être captés et stockés, plutôt que d'être rejetés dans l'atmosphère. Le procédé de l'invention permet ainsi de participer de manière efficace à la diminution des émissions d'oxydes de carbone responsables notamment du réchauffement climatique.

Les exemples ci-dessous illustrent l'invention sans toutefois en limiter la portée définie par les revendications annexées.

### Exemple 1 : Synthèse de poly(oxyméthylène)/MM 2-8 (DMPOM 2-8)

On introduit, dans un ballon double enveloppe de 500 mL équipé d'un réfrigérant, d'une agitation et d'une sonde de température, 100 g de méthylal, 30 g de trioxane et 5 g de résine Amberlyst^{®} A15. On porte l'ensemble à 50°C et on maintient une heure à cette température.

Le mélange réactionnel est ensuite lavé avec 10 g d'une solution d'hydroxyde de sodium à 15% en poids, et on récupère le méthylal résiduel au ballon évaporateur rotatif sous 200 hPa et à 90°C. On obtient ensuite par distillation 32 g de poly(oxyméthylène)/MM avec n compris entre 2 et 8.

### Exemple 2 : Synthèse de DMPOM 2-4 et DMPOM 4-8

On écrête le produit issu de l'exemple 1 par distillation de façon à obtenir une fraction centrée sur un produit « léger » CH₃-(OCH₂)₂₋₄-OCH₃ et une fraction « lourde » centrée sur CH₃-(OCH₂)₄₋₈-OCH₃.

### Exemple 3 : Essai de capture de CO₂ par le méthylal (comparatif)

Dans un réacteur de 1 L à double enveloppe en acier, équipé d'une sonde de température, d'une connexion à une pompe à vide et d'une connexion à un ballast de 1 L contenant 10 bars absolus de pression de CO₂ muni d'un déverseur et d'un manomètre finement gradué, on introduit 250 g de méthylal.

Le solvant est préalablement dégazé par mise sous vide (< 10 mmHg) du réacteur, de façon à chasser un maximum d'air initialement présent dans l'installation et, éventuellement, celui dégazé du solvant grâce à la baisse de la pression.

Tout en gardant le solvant sous vide avec le réacteur fermé, on régule la température à 25°C et on introduit le CO₂ en réglant le déverseur de façon à maintenir 1 bar absolu dans le réacteur contenant le solvant. Dès que le solvant est mis sous agitation, une chute de pression correspondant à la solubilisation du CO₂ est observée. Le CO₂ provient du ballast dans lequel la pression initiale était de 20,0 bars absolus.

Quand le solvant est saturé en CO₂, la pression dans le ballast ne diminue plus et on note la pression finale atteinte. Connaissant la différence de pression au niveau du ballast (P initiale - P finale), le volume du ballast, le volume à vide (sans solvant) de l'installation, le volume de solvant ainsi que la pression et la température au niveau du réacteur, on en déduit en appliquant la loi des gaz parfaits, le volume de CO₂ solubilisé par le solvant.

Une fois la mesure effectuée sous une pression de 1 bar, la pression est augmentée progressivement par palier et de nouvelles mesures sont faites jusqu'à une pression de 15 bars. La courbe de la solubilité du CO₂ (en normaux-litres de gaz par kg de solvant pur) en fonction de la pression en CO₂ est régressée en passant par l'origine et le coefficient directeur de la droite ainsi obtenue est reporté dans le

Tableau 1.

### Exemple 4 : Essai de capture de CO₂ par le DMPOM 2-8

On reproduit l'exemple 3 en remplaçant les 250 g de méthylal par 250 g de produit obtenu à l'exemple 1 que l'on nomme DMPOM 2-8. Les résultats sont reportés dans le Tableau 1.

### Exemple 5 : Essai de capture de CO₂ par le DMPOM 2-4

On reproduit l'exemple 3 en remplaçant les 250 g de méthylal par 250 g de produit obtenu à l'exemple 2 que l'on nomme DMPOM 2-4. Les résultats sont reportés dans le Tableau 1.

### Exemple 6 : Essai de capture de CO₂ par le DMPOM 4-8

On reproduit l'exemple 3 en remplaçant les 250 g de méthylal par 250 g de produit obtenu à l'exemple 2 que l'on nomme DMPOM 4-8. Les résultats sont reportés dans le Tableau 1.

**-- Tableau 1 --**

| Température | Pression (CO₂) | **Exemple 3** | **Exemple 4** | **Exemple 5** | **Exemple 6** |
|---|---|---|---|---|---|
| | | CH₃OCH₂OCH₃ | CH₃O(CH₂O)₂₋₈CH₃ | CH₃O(CH₂O)₂₋₄CH₃ | CH₃O(CH₂O)₄₋₈CH₃ |
| | | Methylal | DMPOM 2-8 | DMPOM2-4 | DMPOM4-8 |
| (°C) | (Bars) | NL/kg | NL/kg | NL/kg | NL/kg |
| | 0 | 0 | 0 | 0 | 0 |
| 25 | 1 | 8,0 | 6,0 | 7,3 | 5,3 |
| 25 | 3 | 24,1 | 17,9 | 22,3 | 16,1 |
| 25 | 6 | 47,8 | 35,8 | 44,4 | 31,6 |
| 25 | 9 | 71,5 | 54,2 | 66,8 | 47,5 |
| 25 | 15 | 121,0 | 93,0 | 111,2 | 79,7 |
| Coefficient directeur des droites de régression Solubilité=f(P_{CO2}) | | **8,0 NL/Kg/bar** | **6,0 NL/Kg/bar** | **7,4 NL/Kg/bar** | **5,3 NL/Kg/bar** |

On remarque aisément dans les essais des exemples 3 à 6 que les solubilités en CO₂ sont d'autant plus fortes que la masse moléculaire moyenne est faible. On remarque également que l'on obtient des droites parfaites entre la quantité de CO₂ absorbée et la pression.

### Exemple 7 (Comparatif) : Essai de capture de CO₂ par la NMP

On reproduit l'exemple 3 en remplaçant les 250 g de méthylal par 250 g de N-méthylpyrrolidone (NMP). Les résultats sont reportés dans le Tableau 2.

### Exemple 8 (Comparatif) : Essai de capture de CO₂ par le DMSO

On reproduit l'exemple 3 en remplaçant les 250 g de méthylal par 250 g de diméthylsulfoxyde (DMSO). Les résultats sont reportés dans le Tableau 2.

### Exemple 9 (Comparatif) : Essai de capture de CO₂ par la tétraline

On reproduit l'exemple 3 en remplaçant les 250 g de méthylal par 250 g de tétrahydronaphtalène (tétraline). Les résultats sont reportés dans le Tableau 2.

**-- Tableau 2 --**

| Température | Pression (CO₂) | **Exemple 3** | **Exemple 4** | **Exemple 7** | **Exemple 8** | **Exemple 9** |
|---|---|---|---|---|---|---|
| | | CH₃OCH₂OCH₃ | CH₃O(CH₂O)₂₋₈CH₃ | Comparatif | Comparatif | Comparatif |
| | | Methylal | DMPOM 2-8 | NMP | DMSO | Tétraline |
| (°C) | (Bars) | NL/kg | N L/kg | N L/kg | N L/kg | N L/kg |
| | 0 | 0 | 0 | 0 | 0 | 0 |
| 25 | 1 | 8,0 | 6,0 | 4,3 | 3,3 | 2,50 |
| 25 | 3 | 24,1 | 17,9 | 12,6 | 10,1 | 8,00 |
| 25 | 6 | 47,8 | 35,8 | 25,2 | 19,7 | 15,90 |
| 25 | 9 | 71,5 | 54,2 | 37,6 | 30 | 22,90 |
| 25 | 15 | 121,0 | 93,0 | 63,1 | 49,7 | 38,70 |
| Coefficient directeur des droites de régression Solubilité=f(P_{CO2}) | | **8,0 NL/Kg/bar** | **6,0 NL/Kg/bar** | **4,2 NL/Kg/bar** | **3,3 NL/Kg/bar** | **2,6 NL/Kg/bar** |

Par rapport aux solvants classiques physiques des exemples comparatifs 7 à 9, on remarque que les dérivés POM selon l'invention montrent des solubilités nettement plus importantes.

### Exemple 10 (Comparatif) : Essai de capture de CO₂ par le DMDEG

On reproduit l'exemple 3 en remplaçant les 250 g de méthylal par 250 g de diéthylèneglycoldiméthyléther (DMDEG). Les résultats sont reportés dans le Tableau 3.

### Exemple 11 (Comparatif) : Essai de capture de CO₂ par le DMTriEG

On reproduit l'exemple 3 en remplaçant les 250 g de méthylal par 250 g de triéthylèneglycoldiméthyléther (DMTriEG). Les résultats sont reportés dans le Tableau 3.

### Exemple 12 (Comparatif) : Essai de capture de CO₂ par le DMTétraEG

On reproduit l'exemple 3 en remplaçant les 250 g de méthylal par 250 g de tétraéthylèneglycoldiméthyléther (DMTétraEG). Les résultats sont reportés dans le Tableau 3.

### Exemple 13 (Comparatif) : Essai de capture de CO₂ par le DMPEG 150

On reproduit l'exemple 3 en remplaçant les 250 g de méthylal par 250 g de poly(éthylèneglycoldiméthyléther) de masse moléculaire moyenne de 150 g/mol (DMPEG 150). Les résultats sont reportés dans le Tableau 3.

### Exemple 14 (Comparatif) : Essai de capture de CO₂ par le DMPEG 250

On reproduit l'exemple 3 en remplaçant les 250 g de méthylal par 250 g de poly(éthylèneglycoldiméthyléther) de masse moléculaire moyenne de 250 g/mol (DMPEG 250). Les résultats sont reportés dans le Tableau 3.

**-- Tableau 3 --**

| Température | Pression (CO₂) | **Exemple 5** | **Exemple 10** | **Exemple 11** | **Exemple 12** | **Exemple 13** | **Exemple 14** |
|---|---|---|---|---|---|---|---|
| | | CH₃O(CH₂O)₂₋₄CH₃ | Comparatif | Comparatif | Comparatif | Comparatif | Comparatif |
| | | DMPOM2-4 | DMDEG | DMTriEG | DMTetraEG | DMPEG₁₅₀ | DMPEG₂₅₀ |
| (°C) | (Bars) | NL/kg | NL/kg | NL/kg | NL/kg | NL/kg | NL/kg |
| | 0 | 0 | 0 | 0 | 0 | 0 | 0 |
| 25 | 1 | 7,3 | 5,1 | 4,3 | 3,5 | 4,0 | 2,8 |
| 25 | 3 | 22,3 | 15,8 | 12,1 | 11,1 | 12,5 | 8,9 |
| 25 | 6 | 44,4 | 31,6 | 24,2 | 22,0 | 23,4 | 17,9 |
| 25 | 9 | 66,8 | 46 | 37,5 | 33,1 | 37,1 | 26,5 |
| 25 | 15 | 111,2 | 78,2 | 60,4 | 55, 8 | 59,9 | 42,2 |
| Coefficient directeur des droites de régression Solubilité=f(P_{CO2}) | | **7,4 NL/Kg/bar** | **5,2 NL/Kg/bar** | **4,1 NL/Kg/bar** | **3,7 NL/Kg/bar** | **4,0 NL/Kg/bar** | **2,9 NL/Kg/bar** |

Dans la famille des dimethyléthylèneglycols, on remarque également la meilleure solubilité du CO₂ dans les composés à plus faibles masse moléculaires. Toutefois, on constate que le composé de la famille POM selon l'invention, le DMPOM2-4 (masse moléculaire 152 g/mol) donne de meilleurs résultats que le DMDEG (masse moléculaire 134 g/mol).

Aussi, et sans être lié par aucune théorie, la Demanderesse pense que les alternances O-C-O-C sont plus efficaces que les alternances O-C-C-O.

On remarque également que, à même nombre de motifs répétitifs, les POM (selon l'invention) donnent toujours de meilleurs résultats que les diéthylèneglycol (DEG).

On note en outre que les POM présentent une viscosité inférieure à celles des DEG, ce qui consiste en un avantage considérable du point de vue énergétique dans les applications de captage des oxydes de carbone, en particulier de CO₂.

## Revendications

1. Utilisation comme agent de piégeage d'oxydes de carbone, en particulier de CO₂, d'au moins un composé de formule (1) suivante :
X-(OCR₂)ₙ-OX' (1),
dans laquelle :
- n est un nombre entier compris entre 2 et 20, de préférence entre 2 et 8,bornes incluses,
- X et X', identiques ou différents, représentent indépendamment l'un de l'autre un radical CₘH₂ₘ₊₁ avec m compris entre 1 et 20, de préférence entre 1 et 10, bornes incluses, et
- R représente l'hydrogène ou X.

2. Utilisation selon la revendication 1, dans laquelle l'agent de piégeage est au moins un composé de formule (1), où les radicaux X et X' sont identiques.

3. Utilisation selon la revendication 1 ou la revendication 2, dans laquelle l'agent de piégeage est au moins un composé de formule (1), où les radicaux R représentent l'atome d'hydrogène.

4. Utilisation selon l'une quelconque des revendications précédentes, dans laquelle l'agent de piégeage est au moins un composé de formule X-(OCH₂)ₙ-OX, où X et n sont tels que définis dans la revendication 1.

5. Utilisation selon l'une quelconque des revendications précédentes, dans laquelle l'agent de piégeage est au moins un composé choisi parmi CH₃-(OCH₂)₂-OCH₃, CH₃-(OCH₂)₃-OCH₃, CH₃-(OCH₂)₄-OCH₃, CH₃-(OCH₂)₅-OCH₃, CH₃-(OCH₂)₆-OCH₃, CH₃-(OCH₂)₇-OCH₃, CH₃-(OCH₂)₈-OCH₃, C₂H₅-(OCH₂)₂-OC₂H₅, C₂H₅-(OCH₂)₃-OC₂H₅, C₂H₅-(OCH₂)₄-OC₂H₅, C₂H₅-(OCH₂)₅-OC₂H₅, C₂H₅-(OCH₂)₆-OC₂H₅, C₂H₅-(OCH₂)₇-OC₂H₅, C₂H₅-(OCH₂)₈-OC₂H₅, et leurs mélanges en toutes proportions, de préférence choisi parmi CH₃-(OCH₂)₂-OCH₃, 1,1,2,2-tétraéthoxyéthane, 1,1,3,3-tétraéthoxypropane, 1,1,3,3-tétraméthoxypropane, et leurs mélanges en toutes proportions.

6. Utilisation selon l'une quelconque des revendications précédentes, dans laquelle le ou les composés de formule (1) peuvent être utilisés seuls ou mélanges avec un ou plusieurs solvants.

7. Procédé de capture d'oxydes de carbone, par exemple CO et/ou CO₂, de préférence de CO₂, comprenant au moins une étape de mise en contact d'un flux gazeux comprenant au moins un oxyde de carbone, avec au moins un composé de formule (1) tel que défini dans l'une des revendications 1 à 6.

8. Procédé selon la revendication 7, dans lequel le flux gazeux a une teneur en oxydes de carbone comprise dans la gamme allant de 1% à 100% en volume, de préférence de 1% à 90% en volume, de préférence encore de 1% à 50% en volume.

9. Procédé selon la revendication 7 ou la revendication 8, dans lequel le ratio composé de formule (1)/oxyde de carbone est compris entre 0,1 et 0,33 kg de composé de formule (1) par litre NTP dudit oxyde de carbone, à 25°C sous 0,1 MPa.

10. Procédé selon l'une quelconque des revendications 7 à 9, dans lequel au moins un composé de formule (1) est choisi parmi le CH₃-(OCH₂)₂₋₈-OCH₃, le CH₃-(OCH₂)₂₋₄-OCH₃, et le CH₃-(OCH₂)₄₋₈-OCH₃.

11. Procédé selon la revendication 7, lequel est un procédé continu de capture d'oxydes de carbone, CO et/ou CO₂ comprenant de manière alternée et consécutive :
- en plus de ladite au moins une étape de mise en contact d'un flux gazeux comprenant au moins un oxyde de carbone, avec ledit au moins un composé de formule (1),
- au moins une étape de régénération du solvant d'absorption par diminution de la pression du solvant enrichi et/ou augmentation de la température du solvant enrichi.

## Patentansprüche

1. Verwendung mindestens einer Verbindung der folgenden Formel (1) :
X-(OCR₂)ₙ-OX' (1),
in der:
- n für eine ganze Zahl zwischen 2 und 20 und vorzugsweise zwischen 2 und 8 einschließlich der Grenzen steht,
- X und X', die gleich oder verschieden sind, unabhängig voneinander für einen CₘH₂ₘ₊₁-Rest stehen, wobei m zwischen 1 und 20 und vorzugsweise zwischen 1 und 10 einschließlich der Grenzen liegt, und
- R für Wasserstoff oder X steht,
als Mittel zum Abfangen von Kohlenstoffoxiden, insbesondere von CO₂.

2. Verwendung nach Anspruch 1, wobei es sich bei dem Abfangmittel um mindestens eine Verbindung der Formel (1), wobei die Reste X und X' gleich sind, handelt.

3. Verwendung nach Anspruch 1 oder Anspruch 2, wobei es sich bei dem Abfangmittel um mindestens eine Verbindung der Formel (1), wobei die Reste R für ein Wasserstoffatom stehen, handelt.

4. Verwendung nach einem der vorhergehenden Ansprüche, wobei es sich bei dem Abfangmittel um mindestens eine Verbindung der Formel X-(OCH₂)ₙ-OX, wobei X und n wie in Anspruch 1 definiert sind, handelt.

5. Verwendung nach einem der vorhergehenden Ansprüche, wobei es sich bei dem Abfangmittel um mindestens eine Verbindung, die aus CH₃-(OCH₂)₂-OCH₃, CH₃-(OCH₂)₃-OCH₃, CH₃-(OCH₂)₄-OCH₃, CH₃-(OCH₂)₅-OCH₃, CH₃-(OCH₂)₆-OCH₃, CH₃-(OCH₂)₇-OCH₃, CH₃-(OCH₂)₈-OCH₃, C₂H₅-(OCH₂)₂-OC₂H₅, C₂H₅-(OCH₂)₃-OC₂H₅, C₂H₅-(OCH₂)₄-OC₂H₅, C₂H₅-(OCH₂)5-OC₂H₅, C₂H₅-(OCH₂)₆-OC₂H₅, C₂H₅-(OCH₂)₇-OC₂H₅, C₂H₅-(OCH₂)₈-OC₂H₅ und Mischungen davon in beliebigen Anteilen und vorzugsweise aus CH₃-(OCH₂)₂-OCH₃, 1,1,2,2-Tetraethoxyethan, 1,1,3,3-Tetraethoxypropan, 1,1,3,3-Tetramethoxypropan und Mischungen davon in beliebigen Anteilen ausgewählt ist, handelt.

6. Verwendung nach einem der vorhergehenden Ansprüche, wobei die Verbindung bzw. die Verbindungen der Formel (1) alleine oder in Abmischung mit einem oder mehreren Lösungsmitteln verwendet werden können.

7. Verfahren zum Abfangen von Kohlenstoffoxiden, beispielsweise CO und/oder CO₂, vorzugsweise von CO₂, das mindestens einen Schritt umfasst, bei dem man einen Gasstrom, der mindestens ein Kohlenstoffoxid umfasst, mit mindestens einer Verbindung der Formel (1) gemäß einem der Ansprüche 1 bis 6 in Kontakt bringt.

8. Verfahren nach Anspruch 7, bei dem der Gasstrom einen Gehalt an Kohlenstoffoxiden im Bereich von 1 bis 100 Vol.-%, vorzugsweise von 1 bis 90 Vol.-% und weiter bevorzugt von 1 bis 50 Vol.-% aufweist.

9. Verfahren nach Anspruch 7 oder Anspruch 8, wobei das Verhältnis von Verbindung der Formel (1) zu Kohlenstoffoxid zwischen 0,1 und 0,33 kg Verbindung der Formel (1) pro Normalliter des Kohlenstoffoxids bei 25°C unter 0,1 MPa liegt.

10. Verfahren nach einem der Ansprüche 7 bis 9, wobei die mindestens eine Verbindung der Formel (1) aus CH₃-(OCH₂)₂₋₈-OCH₃, CH₃-(OCH₂)₂₋₄-OCH₃ und CH₃-(OCH₂)₄₋₈-OCH₃ ausgewählt wird.

11. Verfahren nach Anspruch 7, bei dem es sich um ein kontinuierliches Verfahren zum Abfangen von Kohlenstoffoxiden, CO und/oder CO₂ handelt, das alternierend und aufeinanderfolgend
- neben dem mindestens einen Schritt des Inkontaktbringens eines Gasstroms, der mindestens eine Kohlenstoffoxid umfasst, mit der mindestens einen Verbindung der Formel (1),
- mindestens einen Schritt der Regeneration des Absorptionslösungsmittels durch Verringerung des Drucks des angereicherten Lösungsmittels und/oder Erhöhung der Temperatur des angereicherten Lösungsmittels
umfasst.

## Claims

1. The use, as an agent for trapping carbon oxides, in particular CO₂, of at least one compound of formula (1) below:
X-(OCR₂)ₙ-OX' (1)
in which:
- n is an integer between 2 and 20, preferably between 2 and 8, limits included,
- X and X', which are identical or different, represent, independently of one another, a CₘH₂ₘ₊₁ radical with m between 1 and 20, preferably between 1 and 10, limits included, and
- R represents hydrogen or X.

2. The use as claimed in claim 1, in which the trapping agent is at least one compound of formula (1), where the X and X' radicals are identical.

3. The use as claimed in claim 1 or claim 2, in which the trapping agent is at least one compound of formula (1) where the R radicals represent a hydrogen atom.

4. The use as claimed in any one of the preceding claims, in which the trapping agent is at least one compound of formula X-(OCH₂)ₙ-OX, where X and n are as defined in claim 1.

5. The use as claimed in any one of the preceding claims, in which the trapping agent is at least one compound chosen from CH₃-(OCH₂)₂-OCH₃, CH₃-(OCH₂)₃-OCH₃, CH₃-(OCH₂)₄-OCH₃, CH₃-(OCH₂)₅-OCH₃, CH₃-(OCH₂)₆-OCH₃, CH₃-(OCH₂)₇-OCH₃, CH₃-(OCH₂)₈-OCH₃, C₂H₅-(OCH₂)₂-OC₂H₅, C₂H₅-(OCH₂)₃-OC₂H₅, C₂H₅-(OCH₂)₄-OC₂H₅, C₂H₅-(OCH₂)₅-OC₂H₅, C₂H₅-(OCH₂)₆-OC₂H₅, C₂H₅-(OCH₂)₇-OC₂H₅, C₂H₅-(OCH₂)₈-OC₂H₅, and mixtures thereof in any proportions, preferably chosen from CH₃-(OCH₂) ₂-OCH₃, 1,1,2,2-tetraethoxyethane, 1,1,3,3-tetraethoxypropane, 1,1,3,3-tetramethoxyethane, and mixtures thereof in any proportions.

6. The use as claimed in any one of the preceding claims, in which the compound(s) of formula (1) may be used alone or as mixtures with one or more solvents.

7. A process for capturing carbon oxides, for example CO and/or CO₂, preferably CO₂, comprising at least one step of bringing a gas stream comprising at least one carbon oxide into contact with at least one compound of formula (1) as defined in one of claims 1 to 6.

8. The process as claimed in claim 7, in which the gas stream has a content of carbon oxides within the range extending from 1% to 100% by volume, preferably from 1% to 90% volume, more preferably from 1% to 50% by volume.

9. The process as claimed in claim 7 or claim 8, in which the compound of formula (1)/carbon oxide ratio is between 0.1 and 0.33 kg of compound of formula (1) per NTP liter of said carbon oxide, at 25°C under 0.1 MPa.

10. The process as claimed in any one of claims 7 to 9, in which at least one compound of formula (1) is chosen from methylal, CH₃-(OCH₂)₂₋₈-OCH₃, CH₃-(OCH₂)₂₋₄-OCH₃ and CH₃-(OCH₂)₄₋₈-OCH₃.

11. Process as claimed in claim 7, which is a continuous process for capturing carbon oxides, CO and/or CO₂, comprising alternately and consecutively:
- in addition of the said at least one step of bringing a gas stream comprising at least one carbon oxide with the said at least one compound of formula (1)
- at least one step of regenerating the absorption solvent by reducing the pressure of the enriched solvent and/or increasing the temperature of the enriched solvent.
